# EUROPEAN PATENT SPECIFICATION

(11) **EP 1 863 233 B1**
(45) Date of publication and mention of the grant of the patent: **30.04.2014**
(21) Application number: 07004693.3
(22) Date of filing: 07.03.2007
(51) Int. Cl.: H04Q 11/00, H04L 12/70, H04J 3/16

(54) **Service classification method and system for an optical network terminal**
Verfahren und system zur Service-Klassifizierung für ein optisches Netzwerk-Endgerät
Procédé et système de classification de service pour un terminal de réseau optique

(30) Priority: 29.05.2006 CN 200610060873
(43) Date of publication of application: 05.12.2007
(73) Proprietor: Huawei Technologies Co., Ltd., Longgang District, Shenzhen Guangdong 518129 (CN)
(72) Inventor: Zhao, Jun Huawei Administration Building, IPD, Shenzhen, Guangdong Province 518129 (CN); Tan, Peilong Huawei Administration Building, IPD, Shenzhen, Guangdong Province 518129 (CN); Jiang, Tao Huawei Administration Building, IPD,, Shenzhen, Guangdong Province 518129 (CN); Wang, Feng Huawei Administration Building, IPD,, Shenzhen, Guangdong Province 518129 (CN); Chen, Jun Huawei Administration Building, IPD,, Shenzhen, Guangdong Province 518129 (CN); Wang, Yuntao Huawei Administration Building, IPD,, Shenzhen, Guangdong Province 518129 (CN); Lin, Huafeng Huawei Administration Building, IPD,, Shenzhen, Guangdong Province 518129 (CN); Wei, Guo Huawei Administration Building, IPD,, Shenzhen, Guangdong Province 518129 (CN); Huang, Wei Huawei Administration Building, IPD,, Shenzhen, Guangdong Province 518129 (CN)
(74) Representative: Epping - Hermann - Fischer

(56) References cited:
- EP-A- 1 351 449
- US-A1- 2006 039 390
- US-A1- 2007 127 487

## Description

### BACKGROUND

The present disclosure relates to communication techniques, especially a method and a system of communication for a communication apparatus.

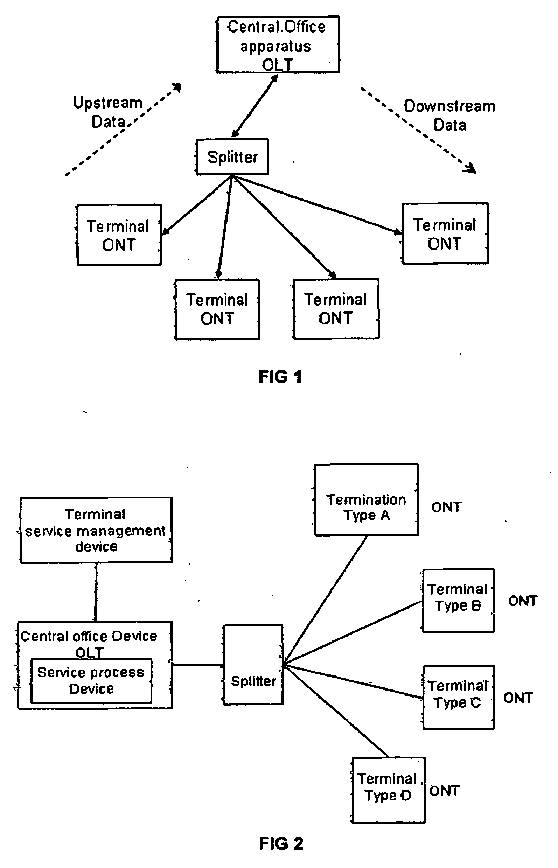

As shown in FIG. 1, a fiber access point-to-multi-point optic network includes a central office optical line terminal (OLT), at least one splitter, a plurality of remote apparatus optical network terminals (ONTs), and the associated fiber. The central office apparatus and optical splitters are connected together with the fiber, which forms the backbone of the optical network. The splitters are connected to each remote apparatus with a plurality of branching optical fibers.

In a passive optical network (PON), the transmission of data streams between the office-side OLT and the remote apparatus ONT is implemented by creating a schedule between the central office OLT and every terminal apparatus ONT. The central office OLT assigns bandwidth grants for upstream data to every terminal apparatus ONT according to the bandwidth requirements of every terminal apparatus. By granting bandwidth to every terminal apparatus ONT, the scheduling for upstream transmission traffic for the terminal apparatus ONT is achieved.

In order to guarantee the quality of service of the transmissions, the terminal apparatus ONTs need to classify the services according to their priorities and transmit each service with a reference to its priority. However, in an actual network application, an OLT connects to different vendors' terminal apparatus ONTs. Since there is no standard for service classification in the terminals, different service classification methods are deployed in the different vendors' terminal apparatus when implementing the service classification. For example, in some vendors' terminals, the service classification is developed using a virtual local area network (VLAN) method, while other vendors implement the Institute of Electrical and Electronics Engineers (IEEE) 802.1p service classification method in their terminals.
Even if the different vendor apparatuses adopted the same classification method, the classification method strategy would likely be different. For instance, "voice service = VLAN1" and "data service = VLAN2" are used in some vendors' terminal apparatus, while "voice service = VLAN5" and "data service = VLAN6" are used in other vendors' terminal apparatus. In such a case, the central office apparatus OLT should configure and process the different terminal apparatus using a common classification strategy so as to realize the communication between central office OLT and the different terminal apparatus. For terminal apparatus that adopt the VLAN service classification method, the central office apparatus configures their service using a common classification strategy. For example, "voice service" would be configured as VLAN1 and "data service" would be configured as VLAN2. For terminal apparatus which adopt the 802.1p service classification method, "voice service" would be configured as COS7 and "data service" would be configured as COS5. Whenever a new terminal apparatus is linked to the OLT or there are some changes to the terminal apparatuses that are linked to OLTs, the operators are required to reconfigure the terminal apparatuses. Thus, the work efficiency is very low and the manual configuration is prone to suffer errors.

United States patent application US2006/0039390A1 discloses a system for forwarding packets in an Ethernet passive optical network (EPON) which includes a central node and at least one remote node. During operation, the system associates a logic link identifier (LLID) to a logical link between the central node and a remote node, wherein the logical link corresponds to a priority level based on a certain service level agreement (SLA).

European patent application EP 1 351 449 Al discloses a point-to-point emulation method for operating an Ethernet passive optical network having an optical line terminal (OLT) and a plurality of optical network units (ONUs) each connected to the OLT.

### SUMMARY

An embodiment of the present disclosure provides a method and a system of communication for a communication apparatus to solve problems like low work efficiency or error-suffering configuration that occur when different terminals are linked to communication networks.

An embodiment of the present disclosure provides a method of communication for a communication apparatus, comprising following steps:
assigning, by a central office apparatus, a terminal apparatus ID for a terminal apparatus when the terminal apparatus is registered to the network;
collecting, by a terminal service management unit, information about the terminal apparatus from information frames received from the terminal apparatus, and configuring, by using the collected information, a database that stores the information about the terminal apparatus, wherein the database comprises a terminal apparatus processing method table and a relationship mapping table between the terminal apparatus ID and terminal type;
configuring, by the terminal service management unit, a service to the terminal apparatus though a central office apparatus, so as to ensure uniformity of service classification of the terminal apparatus and the central office apparatus;
sending an information frame, by the terminal apparatus, to the central office apparatus;
receiving, by the central office apparatus, the information frame, obtaining, by a service processing unit, the terminal apparatus ID from the information frame, querying a processing method corresponding to the information frame from the database according to the obtained terminal apparatus ID and processing the information frame according to an information frame processing method provided in the database, wherein the step of querying the processing method corresponding to the information frame from the database comprises:
   obtaining a terminal type from the relationship mapping table between the terminal apparatus ID and terminal type according to the terminal apparatus ID carried in the information frame; and obtaining the information frame processing method from the terminal apparatus processing method table.

An embodiment of the present disclosure also provides a system of communication for a communication apparatus, which includes the central office apparatus and the terminal apparatus connected to the central office apparatus through the splitter. The system further includes:
a terminal service management unit which is adapted to collect information about the terminal apparatus from information frames received from the terminal apparatus through the central office apparatus, configure, based on the information collected about the terminal apparatus, a database that stores the information about the terminal apparatus, and configure a service to the terminal apparatus through the central office apparatus so as to ensure uniformity of service classification of the terminal apparatus and the central office apparatus, wherein the database comprises a terminal apparatus processing method table and a relationship mapping table between the terminal apparatus ID and terminal type; and
a service processing unit which is adapted to receive an information frame from the central office apparatus, obtain the terminal apparatus ID from the information frame, query a processing method corresponding to the information frame from the database, and process the information frame handed over from the terminal apparatus according to the processing method, wherein the step of querying the processing method corresponding to the information frame from the database comprises: obtaining a terminal type from the relationship mapping table between the terminal apparatus ID and terminal type according to the terminal apparatus ID carried in the information frame; and obtaining the information frame processing method from the terminal apparatus processing method table.

By receiving the transmitted information frames from the terminal apparatus, the central office apparatus automatically obtains the terminal apparatus information from the information frames; the terminal service management unitconfigures the processing method for the terminal information automatically according to the terminal apparatus information, to thereby improve the data processing efficiency and correctness.

### BRIEF DESCRIPTION OF THE DRAWINGS

FIG. 1 is a component diagram of an embodiment of the PON.
FIG. 2 is the network composition diagram of an embodiment of the present disclosure.
FIG. 3 is the message time sequence for an embodiment of the present disclosure.
FIG. 4 is diagram illustrating an implementation of the different terminal service by the central office apparatus OLT for an embodiment of the present disclosure.
FIG. 5 is the service processing procedure diagram for an embodiment of the present disclosure.

### DETAILED DESCRIPTION

The embodiment of the present disclosure will be described in detail with reference to the following drawings.

### Embodiment 1:

As shown in FIG. 2, the terminal service management apparatus is added to the conventional PON. The terminal service management apparatus is involved in:
1. Gathering and storing various terminal apparatus ONT information; and
2. Configuring the service classification method for each terminal apparatus.

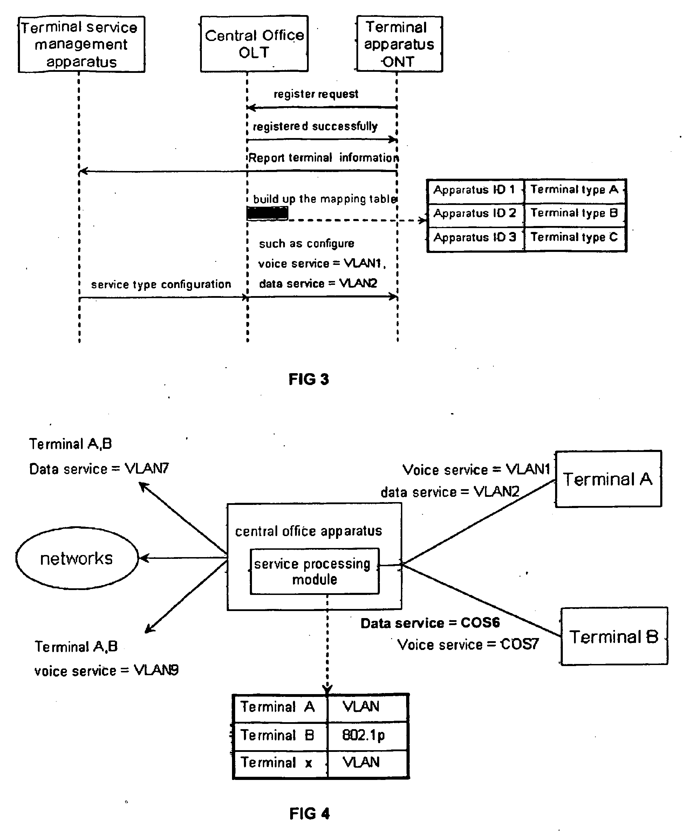

As shown in FIG. 3, when the terminal apparatus ONT is successfully activated and registered to the network, the central office apparatus OLT assigns an apparatus identifier ID. In addition, the terminal apparatus ONT will automatically transmit the manufacturer information, terminal sequence number, terminal type, service classification supported by the terminal, and other terminal attribute information to the terminal service management apparatus through a management information channel build-up between the central office OLT and terminal apparatus ONT. The terminal service management apparatus then queries the inner build-up terminal apparatus processing method table: if there is no relative information for the terminal in the terminal service management apparatus, the transmitted information should be stored into the terminal apparatus processing method table in the terminal service management apparatus; otherwise, the information should be discarded (not shown in the FIG. 3).

After the terminal service management apparatus receives the transmitted information for the registering terminal apparatus, the service configuration information is sent out for the successfully registered terminal apparatus through the management information channel build-up between the central office OLT and the terminal apparatus ONTs using the service classification method supported by the terminal apparatus (such as the VLAN or the 802.1p service classification method).

Referring to FIG. 4, the scheduling procedure for the central office apparatus OLT to execute to different kinds of terminal apparatus ONTs is described in detail below.

When the central office apparatus OLT schedules the upstream data using the bandwidth requirement information transmitted from the various terminal ONTs, the central office apparatus OLT distinguishes the information frames transmitted from the different terminal apparatus ONTs from the received upstream data. The service processing module in the office side apparatus OLT also obtains the terminal apparatus identifier ID assigned by the central office apparatus. The service processing module then finds the corresponding terminal type from the mapping table using the terminal apparatus ID. The terminal service management apparatus determines the processing method for the corresponding terminal apparatus ONT service classification from the terminal apparatus processed method table using the terminal's adopted method type, such as the VLAN method or the 802.1p method. Using the service classification method, the received information frames are processed according to the service classification method. The central office apparatus OLT transmits the processed information frames according to the network side service classification requirements, and uses the common classification strategy to convert the service classification, or nests the service identifier (adds another service classification identifier) to all of the received service information. For example, the service classification processing methods for different terminals, such as VLAN and 802.1p, are switched by the central office apparatus OLT into one having a common classification strategy, such as the VLAN service classification method, or added another service classification identifier based on the original classification. The information frames are processed by the OLT apparatus and sent to the network connected to the central office apparatus.

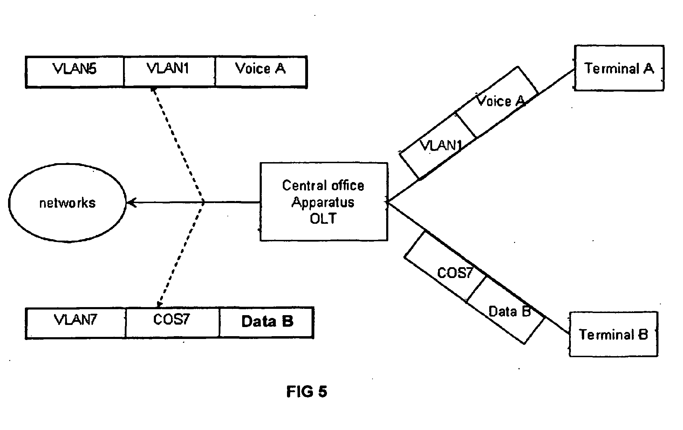

Referring to the FIG. 4 and FIG. 5, the embodiment of the present disclosure is clarified in detail below.

In the central office OLT, the implementation procedure for using a common classification strategy to convert the service identifiers to terminals having different types of service identifiers is as follows.

When network terminal ONT (A) and ONT (B) are activated and registered successfully with the office-side apparatus OLT, the office-side apparatus OLT assigns the terminal identifiers ID(A), ID(B) to the terminals ONT (A) and ONT (B) respectively, and builds up the management information channels to terminals ONT (A) and ONT (B). Network terminals ONT (A) and ONT (B) automatically send the manufacturer information (vendor number), type (a multimedia terminal or a data terminal), service classification method (the service identifier is the VLAN method or the 802.1p COS method) supported by the terminal, and other attribute information (such as the line rate and physical interface) for the network terminals to the terminal service management apparatus through the management information channel build-up between the central office OLT and the terminal apparatus ONTs. The terminal service management apparatus stores and processes the information for the network terminals ONT (A) and ONT (B). At the same time, the terminal service management apparatus configures the service to each network terminal, ONT (A) and ONT (B), through the central office apparatus OLT, using the service classification method supported by the network terminals ONT (A) and ONT (B). If terminal ONT (A) supports the VLAN service classification, the service classification may be configured as voice service = VLAN1 and data service = VLAN2. If terminal ONT (B) supports the 802.1p service classification, the service classification should be configured as voice service COS=7 and data service COS=6. Through the service configuration of each network terminal ONT(A) and ONT(B), uniformity of the service classification of network terminals ONT(A) and ONT(B) and the central office apparatus is preserved.

After the service configuration of the network terminals ONT(A) and ONT(B), the central office apparatus OLT adjusts the upstream data of network terminals ONT(A) and ONT(B) respectively according to the bandwidth requirements of network terminals ONT(A) and ONT(B). The network terminals ONT (A) and ONT (B) then transmit their information frames upstream to the central office apparatus OLT using the information frames' position guaranteed by the central office apparatus OLT and the amount of information transmitted.

When the central office apparatus OLT receives the upstream information frames transmitted from the network terminals ONT (A) and ONT (B), the central office apparatus OLT obtains the identifiers ID(A) and ID(B) for the network terminals ONT (A) and ONT (B) respectively. Using the identifiers for the network terminals ONT (A) and ONT (B), the central office apparatus OLT looks up the mapping table and obtains the terminal types for the corresponding network terminals ONT (A) and ONT (B). Using the terminal type for the network terminals ONT (A) and ONT (B), the central office OLT looks up the service classification method supported by the network terminals ONT (A) and ONT (B) in the terminal service management apparatus database. Using the service classification for the network terminals ONT (A) and ONT (B), the central office apparatus OLT classifies the service traffic transmitted from the network terminals ONT(A) and ONT(B), and converts the service identifiers for the network terminals ONT (A) and ONT (B) into the service classification identifiers for the central office apparatus side. Specifically, the data service identifier VLAN2 for ONT (A) is converted into the VLAN7 for the central office OLT side, and the data service identifier COS6 for ONT (B) is converted into the VLAN7 for the central office OLT side. In addition, the voice service identifier VLAN1 for ONT (A) is converted into the VLAN9 for the central office OLT side, and the voice service identifier COS7 for ONT (B) is converted into the VLAN9 for the central office OLT side. The converted information is then stored into the different PRIs for the information queues. For example, the voice service is sent to the high priority queue and the data service is sent to the low priority queue. The processed information frames are then sent into the networks connected to the central office apparatus.

In the central office OLT, the implementation of the nested service identifiers to the terminals identified by the different types of service identifiers is as follows.

The early implementation process is the same as in the first embodiment. The only difference is that the processing method for the terminal service identifiers is distinguished at the central office OLT.

When the central office OLT receives the data streams from the network terminals ONT (A) and ONT (B), the central office OLT nests the network terminals' service stream identifiers into another service identifier. For example, a central office end voice service identifier VLAN5 is added to the voice service identifier for network terminal ONT (A), and a central office end data service identifier VLAN7 is added to the data service identifier for network terminal ONT (B). Then, these nested service traffics are stored into different PRI queues: the voice service is sent to the high priority queue and the data service is sent to the low priority queue. The processed information frames are then sent into the networks connected to the central office apparatus.

Besides an automatically configuration, the relationship mapping table between the terminal apparatus identifier IDs and the terminal type in the central office apparatus can be configured by manual input through the added terminal apparatus.

In an embodiment, the terminal service management and service processing apparatus can be made up of an interconnected apparatus. Indeed, the interconnected apparatus can be realized through other methods and meanwhile the terminal management apparatus and service processing apparatus can be split into even smaller apparatuses.

### Embodiment 2:

A service processing module and the mapping table for the terminal apparatus identifier ID and processing method may be added into the central office apparatus. The mapping table may include a two-field terminal apparatus identifier ID and the corresponding processing method for the terminal. The mapping table can be configured manually or automatically (as described in the first embodiment). The service processing module may receive the information frames transmitted from the terminals, get the terminal apparatus identifiers from the information frames, determine the mapping table for the terminal apparatus identifiers and processing methods, and process the information frame using the processing method in the mapping table.

As described above, the embodiments are only some of the implementations of the present disclosure. However, as will be appreciated by those skilled in the art, various modifications may be made to the aforementioned embodiments without departing from the scope of the present disclosure. Therefore, the scope of the present disclosure is in accordance with the scope of the following claims.

## Claims

1. A communication method, **characterized by** comprising:
assigning, by a central office apparatus, a terminal apparatus ID for a terminal apparatus when the terminal apparatus is registered to the network;
collecting, by a terminal service management unit, information about the terminal apparatus from information frames received from the terminal apparatus, and configuring, by using the collected information, a database that stores the information about the terminal apparatus, wherein the database comprises a terminal apparatus processing method table and a relationship mapping table between the terminal apparatus ID and terminal type;
configuring, by the terminal service management unit, a service to the terminal apparatus though a central office apparatus, so as to ensure uniformity of service classification of the terminal apparatus and the central office apparatus;
sending an information frame, by the terminal apparatus, to the central office apparatus;
receiving, by the central office apparatus, the information frame, obtaining, by a service processing unit, the terminal apparatus ID from the information frame, querying a processing method corresponding to the information frame from the database according to the obtained terminal apparatus ID and processing the information frame according to an information frame processing method provided in the database,
wherein the step of querying the processing method corresponding to the information frame from the database comprises:
obtaining a terminal type from the relationship mapping table between the terminal apparatus ID and terminal type according to the terminal apparatus ID carried in the information frame; and
obtaining the information frame processing method from the terminal apparatus processing method table.

2. The method of claim 1, wherein the terminal apparatus is an optical network terminal (ONT), the central office apparatus is an optical line terminal (OLT), and the information about the terminal apparatus is information about the ONT.

3. The method of claim 2, wherein the step of configuring the database comprises configuring the optical network terminal processing method table and configuring the relationship mapping table between optical network terminal ID and terminal type.

4. The method of claim 3, wherein the step of configuring the relationship mapping table between optical network terminal ID and terminal type comprises:
registering, by the optical network terminal, with the optical line terminal upon activation, and assigning, by the optical line terminal, an ID to the optical network terminal;
sending, by the optical line terminal, the information about the optical network terminal to a terminal service management unit; and
configuring, by the terminal service management unit, the relationship mapping table between optical network terminal ID and terminal type according to the type of the optical network terminal.

5. The method of claim 4, wherein the step of configuring the optical network terminal processing method table comprises:
upon successful registration of the optical network terminal with the optical line terminal and receipt of information about the manufacturer, serial number and the type of the optical network terminal, service classification method supported by the optical network terminal and other properties of the optical network terminal, configuring, by the terminal service management unit, the received information into the optical network terminal processing method table.

6. The method of claim 1, wherein the step of processing the information frame received from the terminal apparatus comprises: implementing service classification conversion or embedding of service ID on the received terminal service information carried in the information frame.

7. A communication system, comprising a central office apparatus, a splitter, and a terminal apparatus connected to the central office apparatus via the splitter, **characterized in that** the communication system further comprises:
a terminal service management unit which is adapted to collect information about the terminal apparatus from information frames received from the terminal apparatus through the central office apparatus, configure, based on the information collected about the terminal apparatus, a database that stores the information about the terminal apparatus, and configure a service to the terminal apparatus through the central office apparatus so as to ensure uniformity of service classification of the terminal apparatus and the central office apparatus, wherein the database comprises a terminal apparatus processing method table and a relationship mapping table between the terminal apparatus ID and terminal type; and
a service processing unit which is adapted to receive an information frame from the central office apparatus, obtain the terminal apparatus ID from the information frame, query a processing method corresponding to the information frame from the database, and process the information frame handed over from the terminal apparatus according to the processing method, wherein the step of querying the processing method corresponding to the information frame from the database comprises: obtaining a terminal type from the relationship mapping table between the terminal apparatus ID and terminal type according to the terminal apparatus ID carried in the information frame; and obtaining the information frame processing method from the terminal apparatus processing method table.

8. The system of claim 7, wherein the terminal apparatus is an optical network terminal (ONT), the central office apparatus is an optical line terminal (OLT), and the information about the terminal apparatus is information about the ONT.

9. The system of claim 7, wherein the terminal service management unit is further adapted to, upon successful registration of the terminal apparatus with the central office apparatus and receipt of information about the manufacturer, serial number and type of the terminal apparatus, service classification method supported by the terminal apparatus and other properties of the terminal apparatus, configure the received information into the terminal apparatus processing method table and the information about the relationship between terminal apparatus ID and terminal apparatus type into the relationship mapping table between terminal apparatus ID and terminal apparatus type; and
the service processing unit is further adapted to, upon receipt of the information frames, query the processing method corresponding to the received information frame from the relationship mapping table between terminal apparatus ID and terminal apparatus type and the terminal apparatus processing method table, and process the information frame according to the processing method.

## Patentansprüche

1. Kommunikationsverfahren, **dadurch gekennzeichnet, dass** es Folgendes umfasst:
Zuweisen einer Anschlussvorrichtungs-ID für eine Anschlussvorrichtung durch eine Vermittlungsvorrichtung, wenn die Anschlussvorrichtung im Netz angemeldet wird;
Sammeln durch eine Anschlussdienstmanagementeinheit von Informationen über die Anschlussvorrichtung aus Informationsrahmen, die von der Anschlussvorrichtung empfangen werden, und Konfigurieren einer Datenbank, die die Informationen über die Anschlussvorrichtung speichert, unter Verwendung der gesammelten Informationen, wobei die Datenbank eine Anschlussvorrichtungsverarbeitungsverfahrenstabelle und eine Beziehungsabbildungstabelle zwischen der Anschlussvorrichtungs-ID und dem Anschlusstyp umfasst;
Konfigurieren eines Dienstes zu der Anschlussvorrichtung über eine Vermittlungsvorrichtung durch die Anschlussdienstmanagementeinheit, um die Einheitlichkeit der Dienstklassifikation der Anschlussvorrichtung und der Vermittlungsvorrichtung sicherzustellen;
Senden eines Informationsrahmens durch die Anschlussvorrichtung zu der Vermittlungsvorrichtung;
Empfangen des Informationsrahmens durch die Vermittlungsvorrichtung, Erhalten der Anschlussvorrichtungs-ID aus dem Informationsrahmen durch eine Dienstverarbeitungseinheit, Abfragen eines Verarbeitungsverfahrens, das dem Informationsrahmen entspricht, aus der Datenbank gemäß der erhaltenen Anschlussvorrichtungs-ID und Verarbeiten des Informationsrahmens gemäß einem Informationsrahmenverarbeitungsverfahren, das in der Datenbank bereitgestellt wird, wobei der Schritt des Abfragens des Verarbeitungsverfahrens, das dem Informationsrahmen entspricht, aus der Datenbank Folgendes umfasst:
Erhalten eines Anschlusstyps aus der Beziehungsabbildungstabelle zwischen der Anschlussvorrichtungs-ID und dem Anschlusstyp gemäß der Anschlussvorrichtungs-ID, die in dem Informationsrahmen geführt ist; und
Erhalten des Informationsrahmenverarbeitungsverfahrens aus der Anschlussvorrichtungsverarbeitungsverfahrenstabelle.

2. Verfahren nach Anspruch 1, wobei die Anschlussvorrichtung ein Anschluss eines optischen Netzes (ONT) ist, die Vermittlungsvorrichtung ein Anschluss einer optischen Verbindungsleitung (OLT) ist und die Informationen über die Anschlussvorrichtung Informationen über den ONT sind.

3. Verfahren nach Anspruch 2, wobei der Schritt des Konfigurierens der Datenbank das Konfigurieren der Anschlussverarbeitungsverfahrenstabelle des optischen Netzes und das Konfigurieren der Beziehungsabbildungstabelle zwischen der Anschluss-ID des optischen Netzes und dem Anschlusstyp umfasst.

4. Verfahren nach Anspruch 3, wobei der Schritt des Konfigurierens der Beziehungsabbildungstabelle zwischen der Anschluss-ID des optischen Netzes und dem Anschlusstyp Folgendes umfasst:
Arnnelden durch den Anschluss des optischen Netzes bei dem Anschluss der optischen Verbindungsleitung nach der Aktivierung und Zuweisen durch den Anschluss der optischen Verbindungsleitung einer ID zu dem Anschluss des optischen Netzes;
Senden durch den Anschluss der optischen Verbindungsleitung der Informationen über den Anschluss des optischen Netzes zu einer Anschlussdienstmanagementeinheit; und
Konfigurieren durch die Anschlussdienstmanagementeinheit der Beziehungsabbildungstabelle zwischen der Anschluss-ID des optischen Netzes und dem Anschlusstyp gemäß dem Typ des Anschlusses des optischen Netzes.

5. Verfahren nach Anspruch 4, wobei der Schritt des Konfigurierens der Anschlussverarbeitungsverfahrenstabelle des optischen Netzes Folgendes umfasst:
nach erfolgreicher Anmeldung des Anschlusses des optischen Netzes bei dem Anschluss der optischen Leitung und Empfangen von Informationen über den Hersteller, die Seriennummer und den Typ des Anschlusses des optischen Netzes, des von dem Anschluss des optischen Netzes unterstützten Dienstklassifikationsverfahrens und weiterer Eigenschaften des Anschlusses des optischen Netzes, Konfigurieren durch die Anschlussdienstmanagementeinheit der empfangenen Informationen in der Anschlussverarbeitungsverfahrenstabelle des optischen Netzes.

6. Verfahren nach Anspruch 1, wobei der Schritt des Verarbeitens der Informationsrahmen, die von der Anschlussvorrichtung empfangen werden, Folgendes umfasst: Implementieren von Dienstklassifizierungsumsetzung oder Einbetten der Dienst-ID in den empfangenen Anschlussdienstinformationen, die in dem Informationsrahmen geführt sind.

7. Kommunikationssystem, das eine Vermittlungsvorrichtung, einen Splitter und eine Anschlussvorrichtung, die mit der Vermittlungsvorrichtung über den Splitter verbunden ist, umfasst, **dadurch gekennzeichnet, dass** das Kommunikationssystem ferner Folgendes umfasst:
eine Anschlussdienstmanagementeinheit, die ausgelegt ist, Informationen über die Anschlussvorrichtung aus Informationsrahmen, die von der Anschlussvorrichtung über die Vermittlungsvorrichtung empfangen werden, zu sammeln, basierend auf den gesammelten Informationen über die Anschlussvorrichtung eine Datenbank, die die Informationen über die Anschlussvorrichtung speichert, zu konfigurieren und einen Dienst für die Anschlussvorrichtung über die Vermittlungsvorrichtung zu konfigurieren, um die Einheitlichkeit der Dienstklassifikation der Anschlussvorrichtung und der Vermittlungsvorrichtung sicherzustellen, wobei die Datenbank eine Anschlussvorrichtungsverarbeitungsverfahrenstabelle und eine Beziehungsabbildungstabelle zwischen der Anschlussvorrichtungs-ID und dem Anschlusstyp umfasst; und
eine Dienstverarbeitungseinheit, die ausgelegt ist, einen Informationsrahmen von der Vermittlungsvorrichtung zu empfangen, die Anschlussvorrichtungs-ID aus dem Informationsrahmen zu erhalten, ein Verarbeitungsverfahren, das dem Informationsrahmen entspricht, aus der Datenbank abzufragen und den Informationsrahmen, der von der Anschlussvorrichtung übergeben wird, gemäß dem Verarbeitungsverfahren zu verarbeiten, wobei der Schritt des Abfragens des Verarbeitungsverfahrens, das dem Informationsrahmen entspricht, aus der Datenbank Folgendes umfasst: Erhalten eines Anschlusstyps aus der Beziehungsabbildungstabelle zwischen der Anschlussvorrichtungs-ID und dem Anschlusstyp gemäß der Anschlussvorrichtungs-ID, die in dem Informationsrahmen geführt wird; und Erhalten des Informationsrahmenverarbeitungsverfahrens aus der Anschlussvorrichtungsverarbeitungsverfahrenstabelle.

8. System nach Anspruch 7, wobei die Anschlussvorrichtung ein Anschluss eines optischen Netzes (ONT) ist, die Vermittlungsvorrichtung ein Anschluss einer optischen Verbindungsleitung (OLT) ist und die Informationen über die Anschlussvorrichtung Informationen über die ONT sind.

9. System nach Anspruch 7, wobei die Anschlussdienstmanagementeinheit ferner ausgelegt ist, nach erfolgreicher Anmeldung der Anschlussvorrichtung bei der Vermittlungsvorrichtung und Empfangen von Informationen über den Hersteller, die Seriennummer und den Typ der Anschlussvorrichtung, der von der Anschlussvorrichtung unterstützten Dienstklassifikationen und weiterer Eigenschaften der Anschlussvorrichtung die empfangenen Informationen in der Anschlussvorrichtungsverarbeitungsverfahrenstabelle zu konfigurieren und die Informationen über die Beziehung zwischen der Anschlussvorrichtungs-ID und dem Anschlussvorrichtungstyp in die Beziehungsabbildungstabelle zwischen der Anschlussvorrichtungs-ID und dem Anschlussvorrichtungstyp zu konfigurieren; und die Dienstverarbeitungseinheit ferner ausgelegt ist, nach dem Empfangen der Informationsrahmen das Verarbeitungsverfahren, das dem empfangenen Informationsrahmen entspricht, aus der Beziehungsabbildungstabelle zwischen der Anschlussvorrichtungs-ID und dem Anschlussvorrichtungstyp und der Anschlussvorrichtungsverarbeitungsverfahrenstabelle abzufragen und den Informationsrahmen gemäß dem Verarbeitungsverfahren zu verarbeiten.

## Revendications

1. Procédé de communication **caractérisé en ce qu'**il comprend les étapes suivantes :
assigner, par un appareil de central, un ID d'appareil terminal pour un appareil terminal lorsque l'appareil terminal est enregistré dans le réseau ;
collecter, par une unité de gestion de service de terminal, des informations sur l'appareil terminal à partir de trames d'informations reçues de l'appareil terminal et configurer, en utilisant les informations collectées, une base de données qui stocke les informations concernant l'appareil terminal, où la base de données comprend une table de procédé de traitement d'appareil terminal et une table de mappage de relation entre l'ID d'appareil terminal et le type de terminal ;
configurer, par l'unité de gestion de service de terminal, un service au niveau de l'appareil terminal par l'intermédiaire d'un appareil de central, de manière à garantir l'uniformité de la classification de service de l'appareil terminal et de l'appareil de central ;
envoyer une trame d'informations, par l'appareil terminal, à l'appareil de central ;
recevoir, par l'appareil de central, la trame d'informations, obtenir, par une unité de traitement de service, l'ID d'appareil terminal de la trame d'informations, demander un procédé de traitement correspondant à la trame d'informations depuis la base de données conformément à l'ID d'appareil terminal obtenu et traiter la trame d'informations conformément à un procédé de traitement de trame d'informations pourvu dans la base de données,
où l'étape de demande du procédé de traitement correspondant à la trame d'informations provenant de la base de données comprend les étapes suivantes :
obtenir un type de terminal à partir de la table de mappage de relation entre l'ID d'appareil terminal et le type de terminal conformément à l'ID d'appareil terminal acheminé dans la trame d'informations ; et
obtenir le procédé de traitement de trame d'informations à partir de la table de procédé de traitement d'appareil terminal.

2. Procédé selon la revendication 1, dans lequel l'appareil terminal est un terminal de réseau optique (ONT), l'appareil de central est un terminal de ligne optique (OLT) et les informations concernant l'appareil terminal sont des informations concernant l'ONT.

3. Procédé selon la revendication 2, dans lequel l'étape comprenant de configurer la base de données comprend de configurer la table de procédé de traitement de terminal de réseau optique et de configurer la table de mappage de relation entre l'ID de terminal de réseau optique et le type de terminal.

4. Procédé selon la revendication 3, dans lequel l'étape comprenant de configurer la table de mappage de relation entre un ID de terminal de réseau optique et un type de terminal comprend les étapes suivantes :
enregistrer, par le terminal de réseau optique, avec le terminal de ligne optique activé, et assigner, par le terminal de ligne optique, un ID au terminal de réseau optique ;
envoyer, par le terminal de ligne optique, les informations concernant le terminal de réseau optique à une unité de gestion de service de terminal ; et
configurer, par l'unité de gestion de service de terminal, la table de mappage de relation entre l'ID de terminal de réseau optique et le type de terminal conformément au type du terminal de réseau optique.

5. Procédé selon la revendication 4, dans lequel l'étape comprenant de configurer la table de procédé de traitement de terminal de réseau optique comprend les étapes suivantes :
lors de l'enregistrement réussi du terminal de réseau optique avec le terminal de ligne optique et à réception d'informations concernant le fabricant, du numéro de série et du type du terminal de réseau optique, du procédé de classification de service supporté par le terminal de réseau optique et d'autres propriétés du terminal de réseau optique, configurer, par l'unité de gestion de service de terminal, les informations reçues dans la table de procédé de traitement de terminal de réseau optique.

6. Procédé selon la revendication 1, dans lequel l'étape comprenant de traiter la trame d'informations reçue de l'appareil terminal comprend de mettre en oeuvre une conversion de classification de service ou d'intégrer l'ID de service sur les informations de service de terminal reçues acheminées dans la trame d'informations.

7. Système de communication comprenant un appareil de central, un diviseur et un appareil terminal connecté à l'appareil de central par l'intermédiaire du diviseur, **caractérisé en ce que** le système de communication comprend en outre :
une unité de gestion de service de terminal qui est conçue pour collecter des informations concernant l'appareil terminal à partir de trame d'informations reçue depuis l'appareil terminal par l'intermédiaire de l'appareil de central, pour configurer, sur la base des informations collectées concernant l'appareil terminal, une base de données qui stocke les informations concernant l'appareil terminal, et pour configurer un service au niveau de l'appareil terminal par l'intermédiaire de l'appareil de central, de manière à garantir l'uniformité de la classification de service de l'appareil terminal et de l'appareil de central, où la base de données comprend une table de procédé de traitement d'appareil terminal et une table de mappage de relation entre l'ID d'appareil terminal et le type de terminal ; et
une unité de traitement de service qui est conçue pour recevoir une trame d'informations depuis l'appareil de central, pour obtenir l'ID d'appareil terminal depuis la trame d'informations, pour demander un procédé de traitement correspondant à la trame d'informations depuis la base de données et pour traiter la trame d'informations transférée depuis l'appareil terminal conformément au procédé de traitement, où l'étape comprenant de demander le procédé de traitement correspondant à la trame d'informations depuis la base de données comprend les étapes suivantes : obtenir un type de terminal à partir de la table de mappage de relation entre l'ID d'appareil terminal et un type de terminal suivant l'ID d'appareil terminal acheminé dans la trame d'informations ; et obtenir le procédé de traitement de trame d'informations à partir de la table de procédé de traitement d'appareil terminal.

8. Système selon la revendication 7, dans lequel l'appareil terminal est un terminal de réseau optique (ONT), l'appareil de central est un terminal de ligne optique (OLT) et les informations concernant l'appareil terminal sont des informations concernant l'ONT.

9. Système selon la revendication 7, dans lequel l'unité de gestion de service de terminal est en outre conçue pour, lors de l'enregistrement réussi de l'appareil terminal avec l'appareil de central et à réception d'informations concernant le fabricant, du numéro de série et du type de l'appareil terminal, du procédé de classification de service supporté par l'appareil terminal et d'autres propriétés de l'appareil terminal, configurer les informations reçues dans la table de procédé de traitement d'appareil terminal et les informations concernant la relation entre l'ID d'appareil terminal et le type d'appareil terminal dans la table de mappage de relation entre l'ID d'appareil terminal et le type d'appareil terminal ; et
l'unité de traitement de service est en outre conçue pour, à réception des trames d'informations, demander le procédé de traitement correspondant à la trame d'informations reçue depuis la table de mappage de relation entre un ID d'appareil terminal et un type d'appareil terminal et la table de traitement d'appareil terminal, et traiter la trame d'informations conformément au procédé de traitement.
